# EUROPÄISCHE PATENTSCHRIFT

(11) **EP 0 931 591 B1**
(45) Veröffentlichungstag und Bekanntmachung des Hinweises auf die Patenterteilung: **12.06.2002**
(21) Anmeldenummer: 99101119.8
(22) Anmeldetag: 21.01.1999
(51) Int. Cl.: B01L 3/02, G01F 11/02

(54) **Dosierpipette**
Dosing pipette
Pipette de dosage

(30) Priorität: 21.01.1998 DE 19802125; 31.07.1998 DE 19834724
(43) Veröffentlichungstag der Anmeldung: 28.07.1999
(73) Patentinhaber: ELM-Plastic GmbH, D-54647 Dudeldorf/Eifel (DE)
(72) Erfinder: Lonien, Hans, 54647 Dudeldorf (DE); Möhs, Hans, 54647 Dudeldorf (DE)
(74) Vertreter: Zinnecker, Armin, Dipl.-Ing.

(56) Entgegenhaltungen:
- EP-A- 0 723 921
- WO-A-95/01924
- WO-A-96/17787

## Beschreibung

Die Erfindung betrifft eine Dosierpipette nach dem Oberbegriff des Anspruchs 1. Sie betrifft ferner ein Gefäß, insbesondere eine Flasche, mit einer derartigen Dosierpipette.

Die Dosierpipette dient zum Dosieren von Flüssigkeiten oder Präparaten aus einem Gefäß, insbesondere einer Flasche. Derartige Dosierpipetten sind bereits bekannt. Mit ihnen können vorgegebene Flüssigkeitsvolumina aus dem Gefäß aufgenommen, entfernt und an anderer Stelle wieder abgegeben werden.

Die vorbekannten Dosierpipetten bestehen aus einem vorzugsweise zylindrischen Gehäuse bzw. Dosierkörper und einem Kolben, der darin längsverschieblich geführt ist. Durch eine Bewegung des Kolbens kann das Volumen in dem Dosierkörper vergrößert werden, wodurch Flüssigkeit in den Dosierkörper eingesaugt wird. Anschließend kann die Dosierpipette aus der mit Flüssigkeit gefüllten Flasche entnommen werden. Durch einen Druckhub des Kolbens wird die Flüssigkeit dann an anderer Stelle abgegeben. Üblicherweise befindet sich auf dem Kolben oder einem mit dem Kolben verbundenen Teil eine Skalierung, mit der das eingesaugte Flüssigkeitsvolumen gemessen werden kann.

Derartige Dosierpipetten sind allerdings nicht gegen den Gebrauch durch unbefugte Personen, beispielsweise Kinder, gesichert.

Aus der WO 95/01924A und der WO 96/17787A sind Dosierpipetten bekannt, die in eine Flasche mit einer zu dosierenden Flüssigkeit eingesetzt werden können, wobei die Flasche durch eine kindersichere Verschlußkappe verschließbar ist. Die Dosierpipetten bestehen aus einem Dosierkörper und einem Kolben, der in dem Dosierkörper längsverschieblich geführt ist. Der Kolben weist eine Zugstange auf, die aus dem Dosierkörper herausragt. Um das aus dem Dosierkörper herausragende Ende der Zugstange in der kindersicheren Verschlußkappe unterbringen zu können, weist das innere Element der Verschlußkappe einen oberen Teil auf, der hoch genug ist, um das obere Ende der Zugstange aufnehmen zu können.

Aufgabe der Erfindung ist es, eine Dosierpipette der eingangs angegebenen Art vorzuschlagen, die platzsparender aufgebaut ist.

Erfindungsgemäß wird diese Aufgabe durch die Merkmale des Anspruchs 1 gelöst. Sie wird ferner durch ein Gefäß, insbesondere eine Flasche, gelöst, die eine erfindungsgemäße Dosierpipette aufweist.

Erfindungsgemäß weist die Dosierpipette einen Dosierkörper, einen Kolben, der in dem Dosierkörper längsverschieblich geführt ist, und eine Zugstange auf. Die Zugstange ist mit dem Kolben verbunden und in dem Kolben geführt. Sie kann durch eine Feder in eine herausgezogene Stellung gebracht werden, in der ihr dem Kolben abgewandtes Ende aus dem Dosierkörper herausragt. In dieser Stellung kann die Zugstange an ihrem aus dem Dosierkörper herausragenden Ende ergriffen und weiter herausgezogen werden, wodurch auch der Kolben aus dem Dosierkörper herausgezogen wird, so daß Flüssigkeit in den Dosierkörper eingesaugt wird. Die Zugstange kann ferner in eine eingefahrene Stellung gebracht werden, in der ihr dem Kolben abgewandtes Ende nicht aus dem Dosierkörper herausragt. Das dem Kolben abgewandte Ende der Zugstange schließt in dieser Stellung mit dem oberen Ende des Dosierkörpers und/oder des Kolbens bündig ab. Dadurch, daß die Zugstange nicht aus dem Dosierkörper herausragt, kann die Dosierpipette in eine Flasche oder ein sonstiges Gefäß eingebracht und dort mit einer kindersicheren Verschlußkappe verschlossen werden. Auf diese Weise ist die Dosierpipette gegen den Gebrauch durch Unbefugte gesichert. Anstelle einer kindersicheren Verschlußkappe kann auch eine Verschlußkappe oder sonstige Verschlußeinrichtung verwendet werden, die gegen den Gebrauch durch andere Unbefugte auf andere Weise gesichert ist.

Der Dosierkörper weist einen Bund auf, der sich an seinem dem Kolben abgewandten Ende befindet. Der Bund weist nach außen und ist vorzugsweise im Durchmesser größer als der sonstige Umfang bzw. Durchmesser des Dosierkörpers. Ferner ist der Bund flach ausgebildet. Er ist derart ausgestaltet, daß er auf der Öffnung des Gefäßes bzw. der Flasche oder auf einer dort befindlichen Pipettenführung aufliegen kann.

Ferner weist der Dosierkörper eine Öffnung auf, die sich in seinem Bodenbereich befindet. Durch diese Öffnung kann Flüssigkeit in den Dosierkörper, der dann als Saugzylinder wirkt, einströmen, wenn der Kolben aus dem Dosierkörper herausgezogen wird.

Nach einer vorteilhaften Weiterbildung weist der Kolben einen Stößel auf. Femer weist der Kolben vorzugsweise eine Manschette auf. Die Manschette liegt vorzugsweise mit ihrem Außenbereich bzw. Außendurchmesser dichtend an dem Innenumfang bzw. Innendurchmesser des Dosierkörpers an. Hierdurch ist gewährleistet, daß Flüssigkeit in den Dosierkörper einströmt, wenn die Manschette aus dem Dosierkörper herausgezogen wird. Es ist ferner besonders vorteilhaft, wenn der Kolben sowohl einen Stößel als auch eine Manschette aufweist, die miteinander verbunden sind.

Nach einer weiteren vorteilhaften Weiterbildung weist der Kolben bzw. Stößel einen Anschlag auf. Dieser Anschlag ist vorzugsweise als Bund ausgebildet, der vorzugsweise nach außen weist und der vorzugsweise im Außenumfang oder Durchmesser größer ist als der sonstige Bereich des Kolbens bzw. Stößels. Vorzugsweise befindet sich der Anschlag bzw. Bund an dem dem Kolben bzw. der Manschette abgewandten Ende des Stößels. Er liegt dort auf dem oberen Ende des Dosierkörpers auf. Um zu ermöglichen, daß die obere Endfläche des Kolbens bzw. Stößels bündig mit der oberen Endfläche des Dosierkörpers abschließt, ist im oberen Endbereich des Dosierkörpers vorzugsweise ein entsprechender Absatz vorgesehen. Durch den Anschlag des Kolbens bzw. Stößels wird die Bewegungsmöglichkeit des Kolbens bzw. Stößels in den Dosierkörper hinein begrenzt.

Nach einer weiteren vorteilhaften Weiterbildung weist der Kolben bzw. die Manschette eine Verlängerung auf, an der ein Anschlag für die Zugstange vorgesehen ist. Es können mehrere Verlängerungen vorhanden sein, die beispielsweise dadurch hergestellt werden können, daß ein im wesentlichen zylindrischer Körper geschlitzt wird. Die Anschläge befinden sich vorzugsweise am oberen Ende der Verlängerungen; sie weisen vorzugsweise nach innen.

Die Zugstange ist derart federbelastet, daß ihr oberes Ende durch die Federbelastung aus dem Dosierkörper bzw. dem Kolben herausbewegt wird und gegen die Kraft der Federbelastung in den Dosierkörper bzw. Kolben hineingedrückt werden kann. Vorzugsweise ist hierfür zwischen der Zugstange und dem Kolben bzw. der Manschette eine Druckfeder vorgesehen. Diese Druckfeder drückt vorzugsweise gegen das untere Ende der Zugstange.

Die Zugstange kann an ihrem dem Kolben bzw. der Manschette zugewandten Ende einen Anschlag aufweisen. Vorzugsweise ist dieser Anschlag als Bund mit größerem Durchmesser ausgebildet. Der Anschlag wirkt vorzugsweise mit einem oder mehreren entsprechenden Anschlägen an dem Kolben bzw. an der Manschette zusammen und begrenzt die Bewegungsmöglichkeit der Zugstange aus dem Dosierkörper bzw. dem Kolben heraus.

Die Zugstange weist vorzugsweise einen Führungsbund auf, der sich im Bereich des oberen Endes der Zugstange befindet und der gewährleistet, daß die Zugstange in dem Kolben bzw. Stößel auch dann geführt ist, wenn das obere Ende der Zugstange aus dem Kolben bzw. Stößel bzw. Dosierkörper herausragt.

Nach einer weiteren vorteilhaften Weiterbildung ist der an der Zugstange vorgesehene Anschlag nach außen gerichtet. Dieser nach außen gerichtete Anschlag der Zugstange wirkt mit einem entsprechenden Anschlag an der Manschette bzw. an einer Verlängerung der Manschette zusammen, der nach innen gerichtet ist.

Es ist allerdings auch möglich, die umgekehrte Anordnung zu realisieren. Dann ist der an der Zugstange vorgesehene Anschlag nach innen gerichtet. Er wirkt mit einem entsprechenden Anschlag an der Manschette bzw. an einer Verlängerung der Manschette zusammen, der nach außen gerichtet ist.

Nach einer weiteren vorteilhaften Weiterbildung ist an der Zugstange ein weiterer Bund vorgesehen, an dem sich eine Druckfeder abstützt, deren anderes Ende an der Manschette bzw. an deren Verlängerung anliegt.

Vorteilhaft ist es, eine Pipettenführung vorzusehen, durch die der Dosierkörper in der Flasche geführt ist. Die Pipettenführung besitzt vorzugsweise ein zylinderförmiges Teil, das sich zwischen dem Inneren der Flaschenöffnung und dem Äußeren des Dosierkörpers befindet, und einen im oberen Endbereich des rohrförmigen Teils befindlichen, nach außen weisenden Flansch, der auf dem oberen Rand der Öffnung der Flasche aufliegt und sich zwischen dem oberen Rand der Flaschenöffnung und dem entsprechenden Bund bzw. Flansch des Dosierkörpers befindet.

Die Erfindung betrifft ferner ein System, bestehend aus einem Gefäß, insbesondere einer Flasche, und einer erfindungsgemäßen Dosierpipette. Vorzugsweise ist an der Öffnung der Flasche eine Pipettenführung vorgesehen, in der der Dosierkörper der Dosierpipette geführt ist.

Ein Ausführungsbeispiel der Erfindung wird nachstehend anhand der beigefügten Zeichnung im einzelnen erläutert. In der Zeichnung zeigt
- Fig. 1: eine Dosierpipette, bei der sich die Zugstange in der herausgezogenen Stellung befindet, in einer Schnittansicht,
- Fig. 2: die in Fig. 1 dargestellte Dosierpipette mit eingefahrender Zugstange,
- Fig. 3: eine Schnittansicht der Manschette, der Zugstange, des Stößels und des Dosierkörpers der Dosierpipette,
- Fig. 4: eine abgewandelte Ausführungsform, bei der der an der Zugstange vorgesehene Anschlag nach außen gerichtet ist, und
- Fig. 5: eine weitere Ausführungsform, bei der an der Zugstange ein weiterer Bund vorgesehen ist, an dem sich eine Druckfeder abstützt.

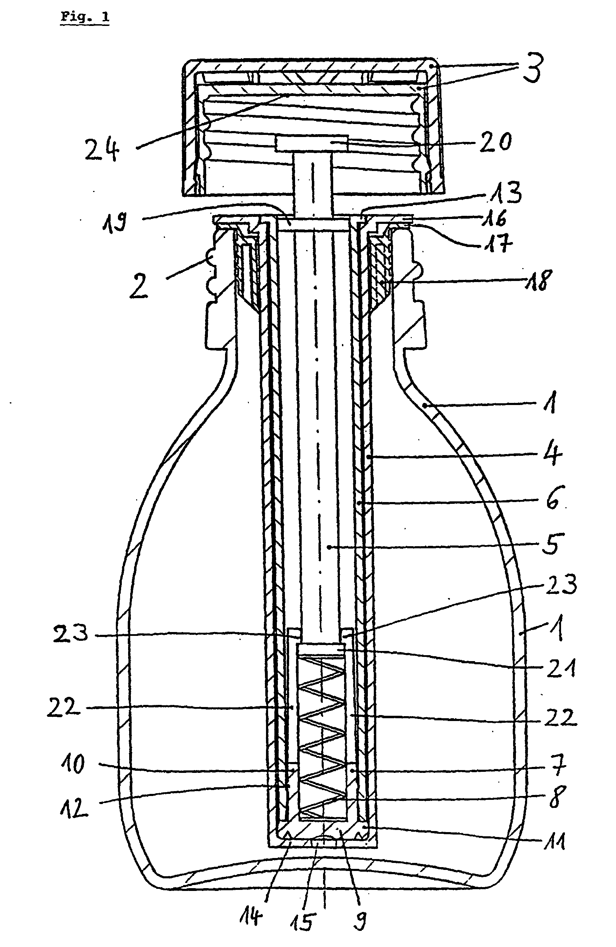

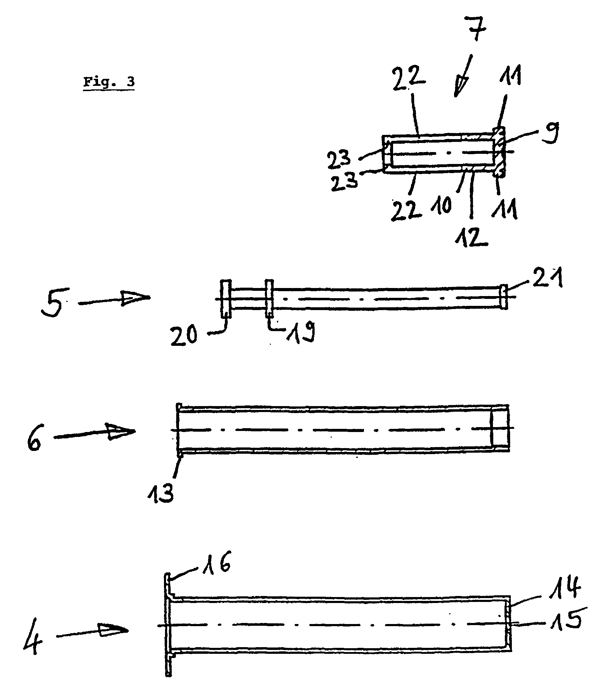

Bei der in den Fig. 1 bis 3 gezeigten Ausführungsform befindet sich eine zu dosierende Flüssigkeit in der Flasche 1. Die Flasche 1 weist an ihrem oberen Ende ein Gewinde 2 auf, auf das eine kindersichere Verschlußkappe 3 aufschraubbar ist. Derartige kindersichere Verschlußkappen sind bekannt und müssen daher nicht im einzelnen beschrieben werden. Sie sind derart ausgestaltet, daß sie wie eine normale Verschlußkappe auf das Gewinde 2 aufgeschraubt werden können. Sobald sie vollständig aufgeschraubt worden sind, können sie jedoch nicht mehr ohne weiteres abgeschraubt werden. Die kindersichere Verschlußkappe ist vielmehr derart ausgebildet, daß sie bei einem Versuch, sie abzuschrauben "durchdreht" und nicht gelöst werden kann. Sie kann nur dadurch abgeschraubt werden, daß zunächst ein auf die Flasche 1 hin gerichteter Druck ausgeübt wird und die Verschlußkappe 3 gleichzeitig aufgeschraubt wird. Hierdurch "greift" das Gewinde der Verschlußkappe mit dem Gewinde 2 der Flasche, und die Verschlußkappe 3 kann abgeschraubt werden. Der erforderliche Druck, der auf die Verschlußkappe ausgeübt werden muß, ist derart bemessen, daß er von Kindern nicht aufgebracht werden kann.

In der Flasche 1 befindet sich die Dosierpipette, die aus einem Dosierkörper 4, einem Kolben und einer Zugstange 5 besteht. Der Kolben besteht seinerseits aus dem Stößel 6, der Manschette 7 und der als Spiralfeder ausgebildeten Druckfeder 8.

Die Manschette 7 besteht aus einem Bodenteil 9, an das sich ein zylinderförmiges Teil 10 anschließt. Die Manschette 7 ist mit dem unteren Ende des Stößels 6 verbunden. Zu diesem Zweck bildet zum einen der äußere Rand 11 des Bodenteils 9 einen Absatz, auf dem das untere Ende des Stößels 6 aufliegt und an dem sich dieses untere Ende des Stößels 6 abstützt. Zum anderen ist am äußeren Umfang des zylinderförmigen Teils 10 ein umlaufender Bund 12 vorgesehen, der in eine entsprechende Nut im Innendurchmesser des Stößels 6 eingreift.

Der Stößel 6 weist an seinem oberen, dem Kolben bzw. der Manschette 7 abgewandten Ende einen Anschlag 13 auf, der als nach außen weisender Bund bzw. Vorsprung bzw. Flansch ausgebildet ist. Der Anschlag 13 liegt in einer entsprechenden Aussparung des Dosierkörpers 4.

Der Kolben ist in dem Dosierkörper 4 längsverschieblich geführt. Die Manschette 7 liegt mit ihrem Außenumfang dichtend am Innenumfang des Dosierkörpers 4 an. Ferner ist der Außendurchmesser des Stößels 6 geringfügig kleiner als der Innendurchmesser des Dosierkörpers 4, so daß der Kolben auch hierdurch in dem Dosierkörper 4 geführt ist. An seinem unteren Ende weist der Dosierkörper 4 eine Bodenfläche 14 auf, in deren Mitte eine Öffnung 15 vorgesehen ist, durch die Flüssigkeit einströmen kann. Der Dosierkörper 4 besitzt ferner an seinem oberen, dem Kolben bzw. der Manschette 7 abgewandten Ende einen nach außen weisenden Flansch bzw. Bund 16, der auf einem Bund 17 einer Pipettenführung 18 aufliegt.

Die Zugstange weist im Bereich ihres oberen Endes einen Führungsbund 19 auf, der mit seinem Außendurchmesser am Innendurchmesser des Stößels 6 anliegt und der dadurch in dem Stößel 6 des Kolbens geführt ist. Am oberen, dem Kolben bzw. der Manschette 7 abgewandten Ende der Zugstange 5 ist ein im Durchmesser größerer Bund 20 vorgesehen, durch den das obere Ende der Zugstange 5 ergriffen werden kann. Die Zugstange 5 weist femer an ihrem unteren, dem Kolben bzw. der Manschette 7 zugewandten Ende einen Anschlag 21 auf, der als ein im Durchmesser größerer Bund ausgestaltet ist. An dem zylinderförmigen Teil 10 der Manschette 7 sind nach oben weisende Verlängerungen 22 vorgesehen, die in Umfangsrichtung durch Schlitze voneinander getrennt sind und an deren oberen Enden nach innen weisende Anschläge 23 vorgesehen sind, die den Anschlag 21 der Zugstange 5 hintergreifen und dadurch die Bewegung der Zugstange 5 in Richtung nach oben (also von dem Kolben bzw. der Manschette 7 weg; "nach außen") begrenzen.

Zwischen dem unteren Ende der Zugstange 5 und dem Bodenteil 9 der Manschette 7 ist eine Druckfeder 8 angeordnet, die sich einerseits am Bodenteil 9 der Manschette 7 und andererseits an der unteren Endfläche des Anschlags 21 der Zugstange 5 abstützt. Die als Spiralfeder ausgebildete Druckfeder 8 drückt die Zugstange 5 nach oben, bis sie die in Fig. 1 gezeigte Endstellung erreicht, in der der Anschlag 21 an den Anschlägen 23 anliegt. Hierbei ist der Abstand des Führungsbundes 19 vom oberen Ende der Zugstange 5 derart bemessen, daß dieser Führungsbund 19 auch in der oberen Endstellung der Zugstange 5 noch innerhalb des Stößels 6 liegt (wie in Fig. 1 dargestellt).

Die Dosierpipette ist in Fig. 1 in der Betriebsstellung gezeigt, in der das obere Ende der Zugstange 5 aus dem Stößel 6 bzw. dem Dosierkörper 4 herausragt und an seinem Bund 20 ergriffen werden kann.

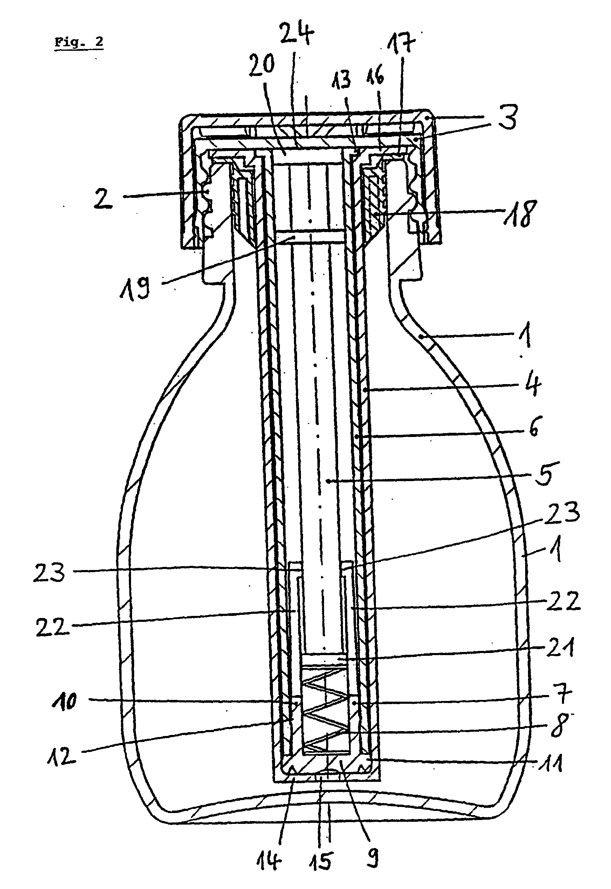

Um die Kindersicherung zu aktivieren, wird die kindersichere Verschlußkappe 3 auf das Gewinde 2 der Flasche 1 aufgeschraubt. Während dieses Vorgangs drückt die innere Deckfläche 24 der Verschlußkappe 3 auf die obere Endfläche des Bundes 20, wodurch die Zugstange 5 gegen die Kraft der Druckfeder 8 nach innen bewegt wird. Wenn die Verschlußkappe 3 vollständig aufgeschraubt ist, wird die in Fig. 2 gezeigte Stellung erreicht, in der die obere Endfläche des Bundes 20, die obere Endfläche des Anschlags 13 und die obere Endfläche des Bundes 16 bündig miteinander abschließen und die innere Deckfläche 24 der Verschlußkappe 3 auf dieser bündig abschließenden Fläche aufliegt. Die Pipette befindet sich innerhalb der Flasche und ist gegen mißbräuchliche oder versehentliche Benutzung gesichert. Wenn die kindersichere Verschlußkappe 3 gelöst ist oder eine anderweitig gesicherte Verschlußkappe von der hierfür befugten Person abgenommen worden ist, ist die Dosierpipette in der aus Fig. 1 ersichtlichen Weise zugänglich und betriebsbereit.

Zum Betrieb der Pipette wird die Zugstange 5 an dem Bund 20 ergriffen und nach oben gezogen. Bei Bedarf kann gleichzeitig der Bund 16 des Dosierkörpers 4 festgehalten bzw. nach unten gedrückt werden. Mit der Zugstange 5 wird dabei auch der Kolben, bestehend aus Stößel 6, Manschette 7 und Druckfeder 8 nach oben bewegt, da der Bund 21 der Zugstange 5 die Anschläge 23 der Verlängerungen 22 mitnimmt. Der Stößel 6 wird durch den äußeren Rand 11 der Manschette 7 nach oben mitgenommen. Die Manschette 7 bewegt sich in dem Dosierkörper 4 nach oben, so daß Flüssigkeit durch die Öffnung 15 in den Dosierkörper 4 eingesaugt wird. Am Außenumfang des Stößels 6 kann eine das aufgenommene Volumen anzeigende Skala angebracht sein.

Sobald das gewünschte Flüssigkeitsvolumen aufgenommen worden ist, wird der Dosierkörper 4 aus der Flasche entnommen. Das Flüssigkeitsvolumen kann dann an anderer Stelle abgegeben werden.

Die Pipettenführung 18 weist einen im wesentlichen zylinderförmigen Teil auf, dessen Innendurchmesser den oberen Endbereich des Dosierkörpers 4 unterhalb des Bundes 16 umgreift und führt. Der Außendurchmesser der Pipettenführung 18 liegt am Innendurchmesser der Öffnung der Flasche 1 an. Ferner weist die Pipettenführung 18 im Bereich ihres oberen Endes einen nach außen weisenden Flansch bzw. Bund 17 auf, der auf dem oberen Rand der Flaschenöffnung aufliegt und der seinerseits mit seiner oberen Endfläche den Bund 16 des Dosierkörpers 4 abstützt.

Die Druckfeder 8 kann an die Zugstange 5 bzw. deren Anschlag 21 angespritzt sein.

Die Dosierpipette wird wie folgt montiert: Zunächst wird die Druckfeder 8 in die Manschette eingeführt. Anschließend wird der Anschlag 21 der Zugstange 5 in die Manschette eingedrückt. Die Verlängerungen 22 und die in Umfangsrichtung dazwischen vorgesehenen Schlitze der Manschette 7 sind dabei derart bemessen, daß der Anschlag 21 durch eine entsprechende Auslenkung der Verlängerungen 22 an den Anschlägen 23 vorbeibewegt werden kann.

Die derart vormontierte Einheit bestehend aus Zugstange 5 und Manschette 7, wird dann in den Stößel 6 eingedrückt, bis der Bund 12 der Manschette 7 in die entsprechende Nut im Stößel 6 eingreift. Schließlich wird die vormontierte Einheit in den Dosierkörper 4 eingeführt.

Zur Montage mit der Flasche 1 wird die Pipettenführung 18 in den Flaschenhals eingedrückt. Dann wird die Dosierpipette in die Pipettenführung eingeführt. Die Flasche 1 kann dann mit der kindersicheren Verschlußkappe 3 verschlossen werden.

Mit der Dosierpipette sind folgende Vorteile erreichbar: Es kann eine optimale Dosiergenauigkeit durch ein 1/10 ml-Graduierung und eine kg-Skala (Patientengewicht) erreicht werden. Die maximale Dosiermenge wird in einem Dosiervorgang ermöglicht. Die Pipette kann einfach und sicher gehandhabt werden: Nach dem Abschrauben der kindersicheren Verschlußkappe wird die Zugstange 5 durch den Druck der Feder 8 aus dem Stößel 6 hochgebracht. Der Stößel 6 kann mit der Zugstange 5 hochgezogen werden, wodurch die gewünschte Dosiermenge angesaugt werden kann. Anschließend kann die Dosier-Garnitur aus der Flasche herausgezogen werden. Die Flüssigkeit bzw. das Präparat kann dann an anderer Stelle durch Herunterdrücken des Stößels 6 entnommen werden. Ein weiterer Vorteil besteht darin, daß die Dosierpipette bzw. die Dosier-Garnitur während der gesamten Anwendungszeit in der Flasche, also in der Flüssigkeit bzw. in dem Präparat verbleibt, so daß keine Keimbildung entstehen kann. Ferner sind herkömmliche, handelsübliche, kindersichere Schraubkappen verwendbar. Eine zusätzliche Verpackung ist nicht erforderlich.

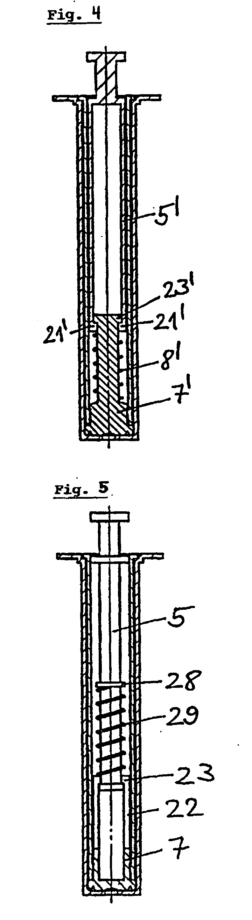

In den Fig. 4 und 5 sind weitere Ausführungsformen gezeigt. Bei diesen Varianten werden jeweils nur diejenigen Teile beschrieben, durch die sie sich von der Ausführungsform gemäß den Fig. 1 bis 3 unterscheiden.

Bei den bevorzugten Ausführungsformen gemäß den Fig. 1 bis 3 hat die Zugstange 5 am unteren Ende einen Anschlag 21, der nach außen gerichtet ist. Sie hat also am unteren Ende außen eine Hinterschneidung als Anschlag. In entsprechender Weise hat bei diesen Ausführungsformen die Manschette 7 einen oder mehrere nach innen gerichtete Anschläge 23. Der Raum für die Feder 8 bzw. den Federweg ist im inneren der Manschette 7 vorgesehen. Die nach oben weisenden Verlängerungen 22 sind der Länge nach aufgeschlitzt, um eine Entformung zu ermöglichen oder zu erleichtern.

Bei den Ausführungsformen der Fig. 4 ist der an der Zugstange 5' vorgesehene Anschlag 21' nach innen gerichtet. In entsprechender Weise ist der Anschlag 23' an der Verlängerung 22' der Manschette 7' nach außen gerichtet. Bei der Ausführungsform nach Fig. 4 ist eine Druckfeder 8' vorhanden, deren unteres Ende sich an dem unteren Teil der Manschette abstützt und deren oberes Ende am unteren Ende der Zugstange 5' bzw. der Anschläge 21' anliegt. Bei dieser Ausführungsform hat die Zugstange 5' am unteren Ende innen eine Hinterschneidung als Anschlag und Raum für den Federweg. Als Umfangsrichtung können Schlitze wegen der Entformung vorhanden sein.

Die Ausführungsform der Fig. 5 stimmt im wesentlichen mit derjenigen nach den Fig. 1 bis 3 überein. Bei der Fig. 5 ist allerdings bei der Zugstange 5 ein weiterer Bund 28 vorgesehen, an dem sich das obere Ende einer Druckfeder 29 abstützt. Das andere, untere Ende der Druckfeder 29 liegt an dem oberen Ende der Manschette 7, also am oberen Ende von deren Verlängerungen 22 bzw. deren Anschlägen 23 an.

## Patentansprüche

1. Dosierpipette für ein Gefäß, insbesondere eine Flasche (1), mit einer zu dosierenden Flüssigkeit, die durch eine kindersichere Verschlußkappe (3) verschließbar ist,
mit einem Dosierkörper (4), einem Kolben, der in dem Dosierkörper (4) längsverschieblich geführt ist, und einer Zugstange (5), die mit dem Kolben verbunden ist,
**dadurch gekennzeichnet,**
**daß** die Zugstange (5) in dem Kolben geführt ist
und **daß** die Zugstange (5) durch eine Feder (8) in eine herausgezogene Stellung bringbar ist, in der ihr dem Kolben abgewandtes Ende (20) aus dem Dosierkörper (4) herausragt, sowie in eine eingefahrene Stellung, in der ihr dem Kolben abgewandtes Ende (20) mit einem Bund (16) des Dosierkörpers (4) bündig abschließt und in der der Kolben auf der Bodenfläche (14) des Dosierkörpers (4) aufliegt.

2. Dosierpipette nach Anspruch 1, **dadurch gekennzeichnet, daß** der Kolben einen Stößel (6) aufweist.

3. Dosierpipette nach Anspruch 1 oder 2, **dadurch gekennzeichnet, daß** der Kolben eine Manschette (7) aufweist.

4. Dosierpipette nach einem der vorhergehenden Ansprüche, **dadurch gekennzeichnet, daß** der Kolben bzw. Stößel (6) einen Anschlag (13) aufweist.

5. Dosierpipette nach einem der vorhergehenden Ansprüche, **dadurch gekennzeichnet, daß** der Kolben bzw. die Manschette (7) eine Verlängerung (22) aufweist, an der ein Anschlag (23) für die Zugstange (5) vorgesehen ist.

6. Dosierpipette nach einem der vorhergehenden Ansprüche, **dadurch gekennzeichnet, daß** zwischen der Zugstange (5) und dem Kolben bzw. der Manschette (7) eine Druckfeder (8) vorgesehen ist.

7. Dosierpipette nach einem der vorhergehenden Ansprüche, **dadurch gekennzeichnet, daß** die Zugstange (5) an ihrem dem Kolben bzw. der Manschette (7) zugewandten Ende einen Anschlag (21) aufweist.

8. Dosierpipette nach einem der vorhergehenden Ansprüche, **dadurch gekennzeichnet, daß** die Zugstange (5) einen Führungsbund (19) aufweist.

9. Dosierpipette nach einem der vorhergehenden Ansprüche, **dadurch gekennzeichnet, daß** der an der Zugstange (5) vorgesehene Anschlag (21) nach außen gerichtet ist.

10. Dosierpipette nach einem der Ansprüche 1 bis 8, **dadurch gekennzeichnet, daß** der an der Zugstange (5') vorgesehene Anschlag (21') nach innen gerichtet ist.

11. Dosierpipette nach einem der vorhergehenden Ansprüche, **dadurch gekennzeichnet, daß** an der Zugstange (5) ein weiterer Bund (28) vorgesehen ist, an dem sich eine Druckfeder (29) abstützt, deren anderes Ende an der Manschette (7) bzw. deren Verlängerung (22) anliegt.

12. System, bestehend aus einem Gefäß, insbesondere einer Flasche (1), und einer Dosierpipette nach einem der vorhergehenden Ansprüche.

## Claims

1. Metering pipette for a vessel, in particular a bottle (1), containing a liquid which is to be metered, which can be closed off by a childproof closure cap (3),
having a metering body (4), a piston, which is guided in a longitudinally displaceable manner in the metering body (4), and a connecting rod (5) which is connected to the piston,
**characterized**
**in that** the connecting rod (5) is guided in the piston,
and **in that** the connecting rod (5) can be moved by a spring (8) into an extended position, in which its end (20) which is remote from the piston projects out of the metering body (4), and into a retracted position, in which its end (20) which is remote from the piston ends flush with a collar (16) of the metering body (4) and in which the piston rests on the bottom surface (14) of the metering body (4).

2. Metering pipette according to Claim 1, **characterized in that** the piston has a plunger (6).

3. Metering pipette according to Claim 1 or 2, **characterized in that** the piston has a sleeve (7).

4. Metering pipette according to one of the preceding claims, **characterized in that** the piston or plunger (6) has a stop (13).

5. Metering pipette according to one of the preceding claims, **characterized in that** the piston or the sleeve (7) has an extension (22), on which a stop (23) for the connecting rod (5) is provided.

6. Metering pipette according to one of the preceding claims, **characterized in that** a compression spring (8) is provided between the connecting rod (5) and the piston or the sleeve (7).

7. Metering pipette according to one of the preceding claims, **characterized in that** the connecting rod (5) has a stop (21) at its end which faces the piston or the sleeve (7).

8. Metering pipette according to one of the preceding claims, **characterized in that** the connecting rod (5) has a guide collar (19).

9. Metering pipette according to one of the preceding claims, **characterized in that** the stop (21) provided on the connecting rod (5) is directed outwards.

10. Metering pipette according to one of Claims 1 to 8, **characterized in that** the stop (21') provided on the connecting rod (5') is directed inwards.

11. Metering pipette according to one of the preceding claims, **characterized in that** on the connecting rod (5) there is a further collar (28), on which a compression spring (29) is supported, the other end of which spring bears against the collar (7) or its extension (22).

12. System comprising a vessel, in particular a bottle (1), and a metering pipette according to one of the preceding claims.

## Revendications

1. Pipette de dosage pour un récipient, notamment une bouteille (1), avec un liquide à doser, qui peut être fermée par un capuchon de fermeture à sécurité protège-enfants (3), avec un corps de dosage (4), un piston qui est guidé d'une manière déplaçable longitudinalement dans le corps de dosage (4) et un tirant (5) qui est relié au piston, **caractérisée en ce que** le tirant (5) est guidé dans le piston et **en ce que** le tirant (5) peut être amené par un ressort (8) dans une position extraite dans laquelle son extrémité (20) éloignée du piston dépasse du corps de dosage (4), ainsi que dans une position rentrée dans laquelle son extrémité (20) éloignée du piston est en affleurement avec un épaulement (16) du corps de dosage (4) et dans laquelle le piston repose sur la surface de fond (14) du corps de dosage (4).

2. Pipette de dosage selon la revendication 1, **caractérisée en ce que** le piston présente un poussoir (6).

3. Pipette de dosage selon la revendication 1 ou 2 **caractérisée en ce que** le piston présente une manchette (7).

4. Pipette de dosage selon l'une des revendications précédentes, **caractérisée en ce que** le piston respectivement poussoir (6) présente une butée (13).

5. Pipette de dosage selon l'une des revendications précédentes, **caractérisée en ce que** le piston respectivement la manchette (7) présente un prolongement (22) sur lequel est prévue une butée (23) pour le tirant (5).

6. Pipette de dosage selon l'une des revendications précédentes, **caractérisée en ce qu'**il est prévu entre le tirant (5) et le piston respectivement la manchette (7) un ressort de pression (8).

7. Pipette de dosage selon l'une des revendications précédentes, **caractérisée en ce que** le tirant (5) présente à son extrémité orientée vers le piston respectivement la manchette (7) une butée (21).

8. Pipette de dosage selon l'une des revendications précédentes, **caractérisée en ce que** le tirant (5) présente un collet de guidage (19).

9. Pipette de dosage selon l'une des revendications précédentes, **caractérisée en ce que** la butée (21) prévue au tirant (5) est dirigée vers l'extérieur.

10. Pipette de dosage selon l'une des revendications 1 à 8, **caractérisée en ce que** la butée (21') prévue au tirant (5') est dirigée vers l'intérieur.

11. Pipette de dosage selon l'une des revendications précédentes, **caractérisée en ce qu'**il est prévu au tirant (5) un collet additionnel (28) sur lequel prend appui un ressort de pression (29) dont l'autre extrémité s'applique à la manchette (7) respectivement au prolongement (22) de celle-ci.

12. Système, constitué d'un récipient, notamment d'une bouteille (1) et d'une pipette de dosage selon l'une des revendications précédentes.
